# EUROPÄISCHE PATENTANMELDUNG

(11) **EP 1 077 373 A2**
(43) Veröffentlichungstag der Anmeldung: **21.02.2001**
(21) Anmeldenummer: 00116888.9
(22) Anmeldetag: 04.08.2000
(51) Int. Cl.: G01N 27/28

(54) **Wechselarmatur für Prozess-Messstelle**

(30) Priorität: 16.08.1999 DE 29914328 U
(71) Anmelder: Liebherr-Mischtechnik GmbH, 88427 Bad Schussenried (DE)
(72) Erfinder: Schneider Josef, D-88400 Biberach/Riss (DE)
(74) Vertreter: Laufhütte, Dieter, Dr.-Ing.

(57) **Zusammenfassung**

Die Erfindung betrifft eine Wechselarmatur zum Austausch eines Meßaufnehmers in einem Meßraum, welche im Reparaturfall eine Entnahme des Meßaufnehmers unter Prozessbedingungen erlaubt. Erfindungsgemäß umfaßt die Wechselarmatur zum Austausch eines Meßaufnehmers in einem Meßraum eine erste in der Wandung des Meßraums befindliche Durchführung, durch die der Meßaufnehmer in den Meßraum einführbar ist, sowie eine zweite in der Wandung des Meßraums befindliche Durchführung, in der ein Schutzrohr verschieblich gelagert ist, wobei das Schutzrohr auf den Meßaufnehmer aufschiebbar ist und wobei durch Aufschieben des Schutzrohrs auf den Meßaufnehmer eine Abdichtung zwischen dem Meßraum und dem Raum um den Meßaufnehmer erfolgt.

## Beschreibung

Die Erfindung betrifft eine Wechselarmatur zum Austausch eines Meßaufnehmers in einem Meßraum, welche im Reparaturfall eine Entnahme des Meßaufnehmers unter Prozeßbedingungen erlaubt.

Es stellt sich häufig die Aufgabe, Meßsonden für die Ermittlung verschiedener Meßwerte in ein flüssiges beziehungsweise gasförmiges Medium einzuführen, um die Meßwerte unter Prozeßbedingungen erfassen zu können. Bei Meßsonden handelt es sich um störanfällige und wartungsintensive Komponenten. Häufig ist es notwendig, einen Meßsonde aus dem jeweiligen Meßraum zu entnehmen, damit sie gereinigt, gewartet, geeicht oder durch eine neue Meßsonde ersetzt werden kann. Es wäre teuer und unwirtschaftlich, wenn man zur Entnahme der Meßsonde den gesamten Prozeßablauf unterbrechen müßte. Daher sind Wechselarmaturen vorgeschlagen und gebaut worden, welche eine Entnahme der Meßsonde unter Prozeßbedingungen, das heißt ohne Unterbrechung des Prozeßablaufs, ermöglichen.

Bisher sind einseitig an den Meßraum angeflanschte Wechselarmaturen bekannt, welche eine Entnahme der Meßsonde ohne Unterbrechung des Prozeßablaufs erlauben. Dazu befindet sich die eigentliche Meßsonde in einer Hülse, welche durch Klappen verschlossen werden kann. Dadurch kann die Meßsonde vom Meßraum isoliert werden. Die Klappen werden dabei durch ein Stellgestänge betätigt.

Diese mechanisch aufwendige Abdichtvorrichtungen sind teuer und störungsanfällig, die Bedienung gestaltet sich umständlich. Da die komplizierte Stellmechanik zur Betätigung der Dichtungsklappen zwischen Meßsonde und Abdichthülse angebracht ist, beträgt der Durchmesser einer einseitig angeflanschten Wechselarmatur mindestens das Dreifache des Sondendurchmessers.

Es ist möglich, daß der empfindliche Meßaufnehmer bei geöffneten Klappen von Verunreinigungen und Partikeln im Medium beaufschlagt wird. Die entstehenden Kräfte müssen von der Meßsonde selbst aufgenommen werden. Bei einer einseitig angeflanschten Wechselarmatur wirken diese Kräfte auf den Befestigungsflansch.

Viele Meßsonden weisen komplizierte Drahtelektroden auf, welche durch auftreffende Partikel leicht verbogen werden können. Bei der Entnahme einer derart verbogenen Meßsonde kann es bei den einseitig angeflanschten Wechselarmaturen zu Problemen kommen; unter Umständen muß dann doch der Prozeßablauf unterbrochen werden.

Aufgabe der Erfindung ist es daher, eine Wechselarmatur zum Austausch eines Meßaufnehmers in einem Meßraum zur Verfügung zu stellen, bei der die oben angeführten Nachteile vermieden werden. Insbesondere ist es Aufgabe der Erfindung, eine Wechselarmatur zum Austausch eines Meßaufnehmers in einem Meßraum zur Verfügung zu stellen, welche wenig störungsanfällig ist, sich einfach bedienen läßt, bei der auftretende Kräfte von Aufnehmer und Befestigungsflansch besser aufgenommen werden können, und bei der der große Durchmesser der bekannten Wechselarmaturen verringert werden kann.

Diese Aufgabe der Erfindung wird durch eine Wechselarmatur zum Austausch eines Meßaufnehmers in einem Meßraum gelöst, welche eine erste in der Wandung eines Meßraums befindliche Durchführung umfaßt, durch die der Meßaufnehmer in den Meßraum einführbar ist, welche eine zweite in der Wandung des Meßraums befindliche Durchführung umfaßt, in der ein Schutzrohr verschieblich gelagert ist, wobei das Schutzrohr auf den Meßaufnehmer aufschiebbar ist und wobei durch Aufschieben des Schutzrohrs auf den Meßaufnehmer eine Abdichtung zwischen dem Meßraum und dem Raum um den Meßaufnehmer erfolgt.

Im Gegensatz zum Stand der Technik ist hier eine zweite Durchführung vorgesehen, durch die das Schutzrohr auf den Meßaufnehmer aufgeschoben werden kann. Dabei weist das Schutzrohr nur einen geringfügig größeren Durchmesser auf als die Meßsonde, und deshalb ist der Durchmesser der erfindungsgemäßen Wechselarmatur wesentlich kleiner als der Durchmesser einer einseitig angeflanschten Wechselarmatur gemäß dem Stand der Technik.

Auftretende Kräfte, wie sie beispielsweise durch Verunreinigungen und größere Partikel verursacht werden, werden bei der erfindungsgemäßen Lösung nicht nur von einem, sondern von zwei Punkten der Wandung des Meßraums aufgenommen. Dies führt zu einer höheren Stabilität der Meßanordnung sowie zu einem besseren Schutz vor Verschleiß und Zerstörung.

Bei der erfindungsgemäßen Lösung wird die Abdichtung des Raums um die Meßsonde dadurch erreicht, daß das Schutzrohr von der gegenüberliegenden Seite her aufgeschoben wird. Dadurch sind die im Stand der Technik verwendeten Dichtungsklappen sowie die Stangen zum Öffnen und Schließen dieser Dichtungsklappen überflüssig geworden. Dadurch wird die Störanfälligkeit reduziert; während die Korrosionsbeständigkeit und Lebensdauer des Systems erhöht wird.

Gemäß einer vorteilhaften Ausführungsform der Erfindung bildet das Ende des Schutzrohrs zusammen mit einem an der ersten Durchführung angeformten Gegenstück ein Ventil. Vorteil dieser Ausführungsform ist, daß die Abdichtung des Meßraums von dem Raum um den Meßaufnehmer durch das Schutzrohr selbst erfolgt und keine zusätzlichen Abdichtvorrichtungen erforderlich sind.

Es ist von Vorteil, wenn an der zweiten Durchführung ein Führungsrohr angeflanscht ist, in dem das Schutzrohr verschieblich aufgenommen ist. Das Führungsrohr gewährleistet eine genaue Lagerung des Schutzrohrs, wobei insbesondere eine Verkippung vermieden wird. Dadurch kann auch gewährleistet werden, daß das Schutzrohrende exakt auf dem an der ersten Durchführung angeformten Gegenstück aufsetzt.

Gemäß einer weiteren vorteilhaften Ausführungsform der Erfindung wird das Ende des Meßaufnehmers vom Ende des Schutzrohrs in seiner maximal vom Meßaufnehmer entfernten Position konzentrisch umfaßt. Bei normalen Prozeßbedingungen ist das Schutzrohr nicht auf den Meßaufnehmer aufgeschoben; es befindet sich in seiner vom Meßaufnehmer entfernten Position. Die Meßsonde ist weitgehend freigegeben und kann von dem jeweiligen Medium umströmt werden. In dieser Position wird das Ende des Meßaufnehmers vom Ende des Schutzrohrs noch umfaßt. Das Schutzrohr hat daher eine gewisse Stütz- und Stabilisierungsfunktion und fixiert das freie Ende der Meßsonde. Insbesondere kann dadurch das Verbiegen beziehungsweise Abbrechen der Meßsonde verhindert werden. Die Gefahr des Verbiegens beziehungsweise Abbrechens besteht insbesondere dann, wenn das (strömende) Medium größere Partikel beziehungsweise Verunreinigungen enthält, welche die Meßsonde beaufschlagen.

Eine weitere vorteilhafte Ausführungsform der Erfindung sieht vor, daß der Vortrieb des Schutzrohrs pneumatisch oder hydraulisch erfolgt. Dabei wird das Schutzrohr durch eine pneumatische oder hydraulische Stellkolben-Zylindereinheit bewegt, durch die das Schutzrohr in kurzer Zeit auf den Meßaufnehmer aufgeschoben werden kann. Insbesondere in explosionsgeschützten Bereichen, in dem eine Funkenbildung unter allen Umständen vermieden werden muß, bietet sich die Verwendung von pneumatischen beziehungsweise hydraulischen Stellgliedern für die erfindungsgemäße Wechselarmatur an.

Eine weitere Ausführungsform der Erfindung sieht vor, daß an das Schutzrohr eine Gewindestange angeformt ist, deren Gewinde in das Innengewinde einer Halterung eingreift. Bei dieser Lösung wird durch die Drehung von Gewindestange und Schutzrohr erreicht, daß sich das Schutzrohr ― je nach Drehrichtung ― auf den Meßaufnehmer zu oder von diesem weg bewegt. Daher kann das Schutzrohr durch Drehen der Gewindestange auf den Meßaufnehmer aufgeschoben werden.

Es ist von Vorteil, wenn an das Ende des Schutzrohrs eine Muffe mit Innengewinde angeformt ist, wobei das Innengewinde in das Außengewinde einer Gewindestange eingreift, deren Drehung einen Vorschub des Schutzrohrs bewirkt. Ein Vorteil dieser Lösung ist, daß sich hier nur die Gewindestange dreht, während sich das Schutzrohr mit der angeformten Gewindemuffe nicht mitdreht. Dadurch dreht sich auch das Schutzrohrende nicht mit, und deshalb wird die Beanspruchung der durch das Schutzrohrende und die erste Durchführung gebildeten Abdichtung verringert. Ein weiterer Vorteil ist, daß diese Bauform weniger Platz beansprucht als die oben beschriebene Lösung, bei der die Gewindestange an das Schutzrohr angeformt ist.

Weitere Einzelheiten und Vorteile der Erfindung werden nachfolgend anhand mehrerer in den Zeichnungen dargestellter Ausführungsbeispiele erläutert. Es zeigen:
- Figur 1: eine Gesamtdarstellung der erfindungsgemäßen Wechselarmatur unter Prozeßbedingungen;
- Figur 2: eine Ausschnittsvergrößerung von Figur 1, welche die Durchführung für das Schutzrohr zeigt;
- Figur 3: eine Ausschnittvergrößerung aus Figur 1, welche den Abschluß des Führungsrohrs und das darin verschieblich gelagerte Schutzrohr sowie ein angeformtes Gewinderohr darstellt;
- Figur 4: eine Gesamtdarstellung der erfindungsgemäßen Wechselarmatur unter Wartungsbedingungen, wobei das Schutzrohr auf den Meßaufnehmer aufgeschoben ist;
- Figur 5: eine Ausschnittsvergrößerung aus Figur 4, welche die Durchführung für die Meßsonde sowie das aus der Durchführung und dem Schutzrohrende gebildete Ventil darstellt;
- Figur 6: eine alternative Ausführungsform zu der in den Figuren 1 und 4 dargestellten Lösung, bei der der Vortrieb des Schutzrohrs durch eine an das Schutzrohr angeformte Gewindemuffe erfolgt;
- Figur 7: eine Wechselarmatur gemäß dem Stand der Technik.

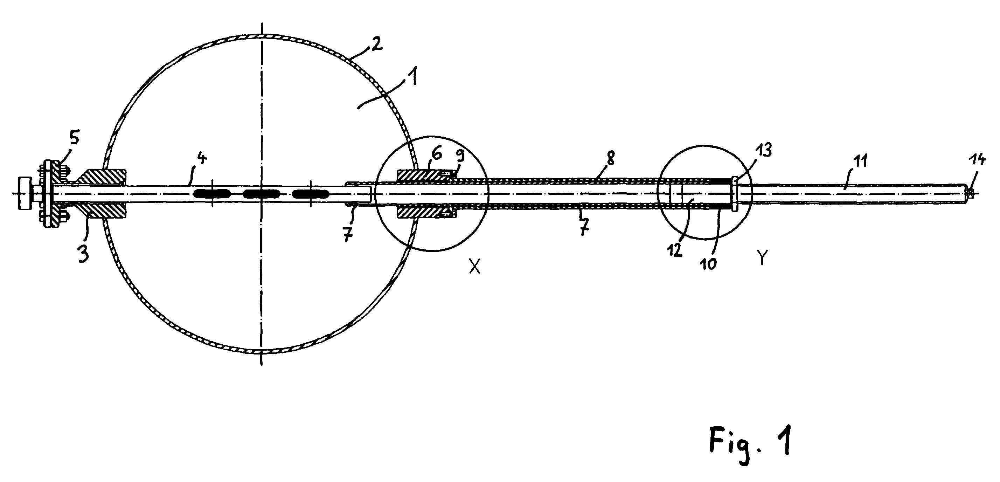

In Figur 1 ist die erfindungsgemäße Wechselarmatur mit eingeschobener Meßsonde 4 im Prozeßbetrieb dargestellt. Der durch die Wandung 2 begrenzte Meßraum 1 enthält dabei das ruhende oder strömende Medium. Bei dem Medium kann es sich um ein Gas oder um eine Flüssigkeit, beispielsweise um Öl handeln. In der Wandung 2 befindet sich eine Durchführung 3 für die Meßsonde, die eine Bohrung zum Einschieben der Meßsonde 4 in den Meßraum 1 aufweist. Der Flansch 5 dient zur Verschraubung der Meßsonde 4 mit der Durchführung 3. Bei dem Meßaufnehmer 4 kann es sich beispielsweise um eine Sonde für den pH-Wert, um eine Sonde zur Messung des Wassergehalts von Öl, etc. handeln. In der Meßsonde 4 können Meßfelder zur Durchführung der eigentlichen Messung vorgesehen sein.

Gegenüber der Durchführung 3 für die Meßsonde befindet sich die Durchführung 6, in der das Schutzrohr 7 verschieblich gelagert ist. Das Schutzrohr 7 bewegt sich dabei in einem Führungsrohr 8, welches mit seinem angeformten Flansch 9 an die Durchführung 6 angeschraubt ist. An das Führungsrohr 8 ist die Anschlagsmuffe 10 angeschweißt, die einen Anschlag für das Schutzrohr 7 bildet. In Figur 1 ist das Schutzrohr 7 in seiner maximal von der Meßsonde 4 entfernten Position gezeigt. In das Schutzrohr 7 ist der Stababschnitt 12 des Gewindestabs 11 eingepaßt, wobei der Stababschnitt 12 kein Gewinde aufweist. In das Außengewinde des Gewindestabs 11 greift das Innengewinde der Kontermutter 13 ein, welche mit der Anschlagsmuffe 10 verschweißt ist. Ein Vierkant 14 ist an den Gewindestab 11 angeformt.

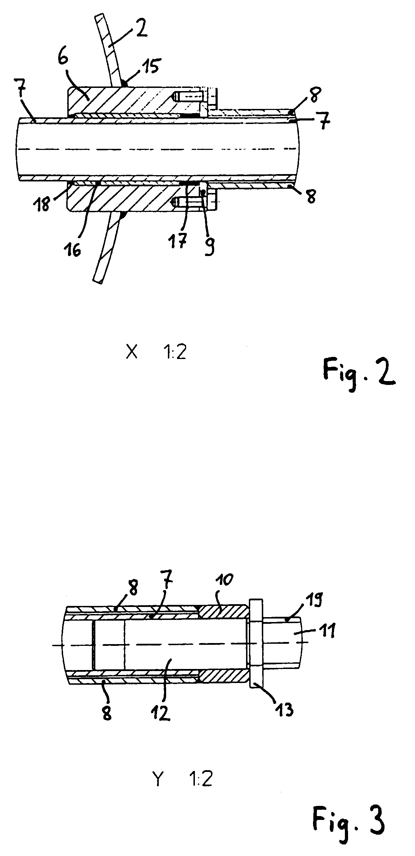

Fig. 2 ist eine Ausschnittsvergrößerung von Fig. 1 (Kreis "X" in Fig. 1). Dargestellt ist die in der Wandung 2 befindliche Durchführung 6 für das Schutzrohr 7. Die Wandung 2 und die Durchführung 6 sind miteinander verschweißt (Schweißnaht 15). Das Führungsrohr 8, das mit seinem Flansch 9 an die Durchführung 6 angeschraubt ist, verbessert die Stabilität und Genauigkeit der Führung. Mit der Durchführung 6 ist eine ringförmige Hülse 16 verbunden, welche das Schutzrohr 7 umschließt, wobei das Schutzrohr 7 in der Hülse 16 verschoben werden kann. Die Hülse 16 besteht vorzugsweise aus einem Kunststoff mit geringem Abrieb und geringer Gleitreibung. Ein Kunststoff mit derartigen Eigenschaften ist beispielsweise Viton. In die Durchführung 6 ist desweiteren ein Dichtungsring 17 eingepaßt, der das Schutzrohr 7 rundum abdichtet und insbesondere ein Eindringen des Mediums vom Meßraum 1 in den Spalt zwischen Schutzrohr 7 und Führungsrohr 8 verhindert. Außerdem ist ein ringförmiger Abstreifer 18 vorgesehen, durch den die Oberfläche des Schutzrohrs 7 von dem anhaftenden Medium befreit wird. Dadurch wird eine Benetzung der Hülse 16 mit dem Medium verhindert. Sowohl der Dichtungsring 17 als auch der ringförmige Abstreifer 18 sind vorzugsweise aus PTFE ausgeführt.

Fig. 3 zeigt das Ende des Führungsrohrs 8 in einer Ausschnittsvergrößerung (Kreis "Y" in Fig. 1). An das Führungsrohr 8 ist die Anschlagsmuffe 10 angeschweißt, und mit dieser ist die Kontermutter 13 verbunden. Das Innengewinde der Kontermutter 13 greift in das Außengewinde 19 des Gewindestabs 11 ein. Der Stababschnitt 12 weist kein Außengewinde auf. Durch den Stababschnitt 12 ist der Gewindestab 11 in das Schutzrohr 7 fest eingepaßt, so daß sich bei einer Drehung des Gewindestabs 11 das Schutzrohr 7 mitdreht. Dabei schraubt sich der Gewindestab 11 in die Kontermutter 13 hinein bzw. heraus, und dadurch kann das Schutzrohr 7 auf die Meßsonde zu bzw. von dieser weg bewegt werden.

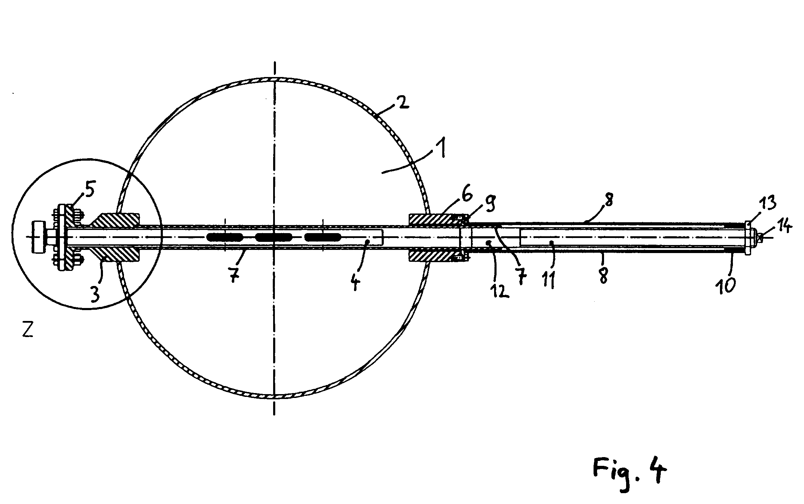

Fig. 4 zeigt eine Gesamtdarstellung der erfindungsgemäßen Wechselarmatur, wobei hier im Unterschied zu Fig. 1 das Schutzrohr 7 vollständig auf die Meßsonde 4 aufgeschoben ist und der Raum um die Meßsonde 4 gegenüber dem Meßraum 1 vollständig abgedichtet ist. Bei dieser Stellung des Schutzrohrs kann sodann die Meßsonde 4 zu Wartungs- und Reinigungszwecken entnommen werden. Das Schutzrohr 7 wurde auf die Meßsonde 4 aufgeschraubt, indem der Gewindestab 11 mittels des angeformten Vierkants 14 in das Innengewinde der Kontermutter 13 eingedreht wurde. Dadurch wurde das Ende des Schutzrohrs 7 auf die Durchführung 3 zu bewegt und schließlich dichtend gegen die Durchführung 3 gepreßt.

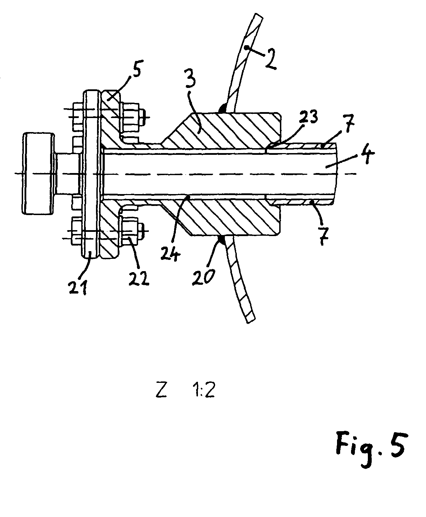

Dies ist in Fig. 5 erkennbar, welche eine Ausschnittsvergrößerung (Kreis "Z") von Fig. 4 ist. Die Durchführung 3 ist in die Wandung 2 eingepaßt und mit dieser verschweißt. Durch die Bohrung in der Durchführung 3 ist die Meßsonde 4 in die Meßkammer 1 eingeschoben. Zur Fixierung der Meßsonde wurde die an die Meßsonde angeformte Scheibe 21 mit dem Flansch 5 verschraubt (22). In Fig. 5 ist auch das auf die Meßsonde 4 aufgeschobene Schutzrohr 7 zu erkennen, dessen Ende den Ventilsitz 23 bildet. An die Durchführung 3 ist ein Gegenstück zum Ventilsitz 23 angeformt, gegen das das Schutzrohr 7 gedrückt wird. Dadurch wird eine vollständige Abdichtung zwischen der Meßkammer 1 und dem Spalt 24 um die Meßsonde 4 erreicht. In der Durchführung 3 kann eine Entlüftungsöffnung vorgesehen sein, um das im Spalt 24 befindliche Medium abfließen lassen zu können. Durch die vollständige Abdichtung zwischen dem Meßraum 1 und dem Raum um den Meßaufnehmer 24 ist es möglich, die Meßsonde zu entnehmen, ohne den Prozeßablauf unterbrechen zu müssen.

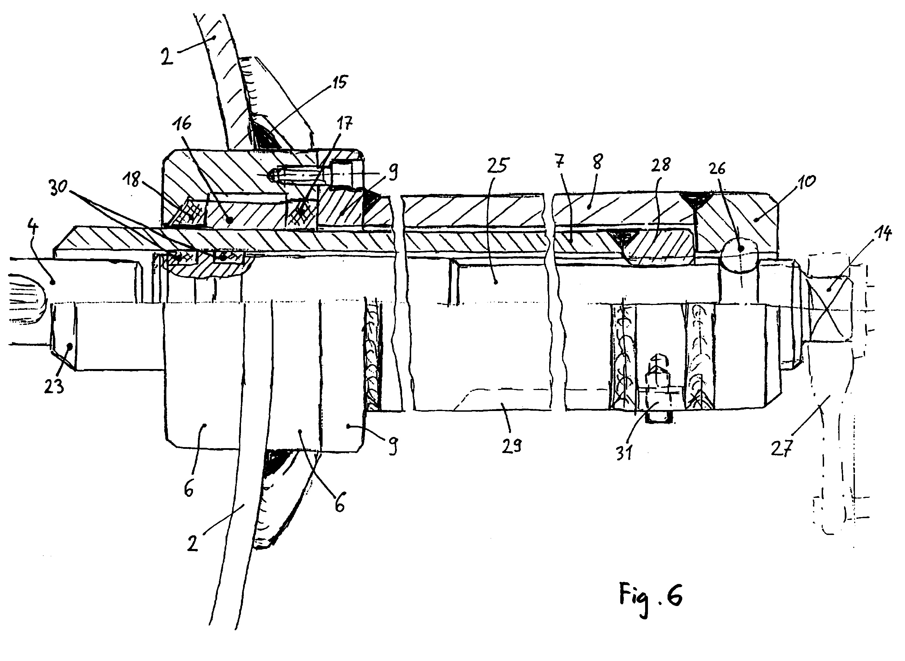

In Fig. 6 ist eine alternative Möglichkeit gezeigt, den Vortrieb des Schutzrohrs 7 zu bewerkstelligen. Dazu ist ein Plungerzylinder mit einem Gewindestab 25 vorgesehen, der in dem Kugellager 26 drehbar gelagert ist. Über den Vierkant 14 wird der Gewindestab 25 angetrieben (27). In das Außengewinde des Gewindestabs 25 greift das Innengewinde der Gewindemuffe 28 ein, welche mit dem Schutzrohr 7 verschweißt ist. Wenn man nun verhindert, daß sich die Gewindemuffe 28 und das Schutzrohr 7 mit dem Gewindestab 25 drehen, dann kann das Schutzrohr 7 durch Drehung der Welle 25 vor- und zurückbewegt werden. Das Mitdrehen des Schutzrohrs 7 wird durch eine im Führungsrohr 8 befindliche Nut 29 verhindert, in die ein am Schutzrohr 7 angebrachter Stift eingreift. Es ist auch möglich, eine Nut im Schutzrohr 7 vorzusehen, in die ein mit dem Führungsrohr 8 verbundener Stift eingreift. Um den Plungerzylinder gegenüber dem Meßraum 1 abzudichten, sind Dichtungsringe 30 vorgesehen, welche ein Eindringen des Mediums in den Spalt zwischen dem Plungerzylinder und dem Schutzrohr 7 verhindern. Auch diese Dichtungsringe bestehen vorzugsweise aus PTFE.

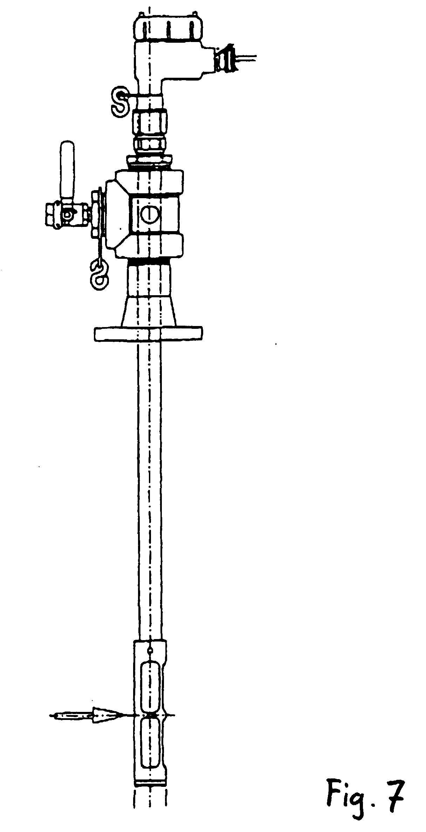

In Fig. 7 ist eine Ausführungsform einer Wechselarmatur gemäß dem Stand der Technik dargestellt.

## Patentansprüche

1. Wechselarmatur zum Austausch eines Meßaufnehmers (4) in einem Meßraum (1), welche eine erste in der Wandung (2) des Meßraums befindliche Durchführung (3) umfaßt, durch die der Meßaufnehmer (4) in den Meßraum (1) einführbar ist, welche einen zweite in der Wandung (2) des Meßraums befindliche Durchführung (6) umfaßt, in der ein Schutzrohr (7) verschieblich gelagert ist, wobei das Schutzrohr auf den Meßaufnehmer (4) aufschiebbar ist und wobei durch Aufschieben des Schutzrohrs (7) auf den Meßaufnehmer (4) eine Abdichtung zwischen dem Meßraum und dem Raum um den Meßaufnehmer (24) erfolgt.

2. Wechselarmatur nach Anspruch 1, dadurch gekennzeichnet, daß das Ende (23) des Schutzrohrs (7) zusammen mit einem an der ersten Durchführung (3) angeformten Gegenstück ein Ventil bildet.

3. Wechselarmatur nach einem der Ansprüche 1 oder 2, dadurch gekennzeichnet, daß an der zweiten Durchführung (6) ein Führungsrohr (8) angeflanscht ist, in dem das Schutzrohr (7) verschieblich aufgenommen ist.

4. Wechselarmatur nach einem der Ansprüche 1 bis 3, dadurch gekennzeichnet, daß das Ende des Meßaufnehmers vom Ende des Schutzrohrs in seiner maximal vom Meßaufnehmer entfernten Position umfaßt wird.

5. Wechselarmatur nach einem der Ansprüche 1 bis 4, dadurch gekennzeichnet, daß der Vortrieb des Schutzrohrs (7) pneumatisch erfolgt.

6. Wechselarmatur nach einem der Ansprüche 1 bis 4, dadurch gekennzeichnet, daß der Vortrieb des Schutzrohrs (7) hydraulisch erfolgt.

7. Wechselarmatur nach einem der Ansprüche 1 bis 4, dadurch gekennzeichnet, daß an das Schutzrohr (7) eine Gewindestange (12) angeformt ist, deren Außengewinde (19) in das Innengewinde einer Halterung eingreift.

8. Wechselarmatur nach einem der Ansprüche 1 bis 4, dadurch gekennzeichnet, daß an das Schutzrohr (7) eine Muffe (28) mit Innengewinde angeformt ist, wobei das Innengewinde in das Außengewinde einer Gewindestange (25) eingreift, deren Drehung einen Vorschub des Schutzrohrs bewirkt.
